# EUROPEAN PATENT APPLICATION

(11) **EP 4 667 513 A1**
(43) Date of publication of application: **24.12.2025**
(21) Application number: 24778950.6
(22) Date of filing: 27.02.2024
(51) Int. Cl.: C08J 5/18, B29C 55/02, B32B 27/32, B29K 23/00

(54) **STRETCHED FILM AND METHOD FOR MANUFACTURING SAME**

(30) Priority: 30.03.2023 JP 2023054832
(71) Applicant: C.I. TAKIRON Corporation, Kita-Ku Osaka-Shi Osaka 530-0001 (JP)
(72) Inventor: SASAHARA, Kazufusa, Osaka-shi, Osaka 530-0001 (JP); MORI, Keiichi, Osaka-shi, Osaka 530-0001 (JP); OSHIMA, Hiroyuki, Osaka-shi, Osaka 530-0001 (JP)
(74) Representative: advotec.
(86) International application number: PCT/JP2024/006925
(87) International publication number: WO 2024/202808

(57) **Abstract**

A stretched film is composed mainly of polyethylene having a density of 0.950 g/cm³ or more. The content of the polyethylene having a density of 0.950 g/cm³ or more in the entire stretched film is more than 50 mass%. The thermal shrinkage percentage in the film stretching direction upon heating at 120°C for 10 minutes is 3% or less.

## Description

### TECHNICAL FIELD

The present invention relates to stretched films used for packaging films etc., and methods for manufacturing the same.

### BACKGROUND ART

For example, laminates in which a base film composed of a resin material and a sealant film composed of a material different from the resin material of the base film are laminated together have been conventionally employed as packaging films used for pouches etc.

Reducing the environmental impact of plastics in general has been receiving increasing attention, and packaging films are also expected to be recyclable. However, in the case of laminates composed of films made from different types of materials as described above, it is difficult to separate the materials, resulting in poor recyclability.

In view of this, in recent years, there has been a growing movement toward monomaterial packaging films, namely films made from a single type of material. Examples of resins used in monomaterial packaging films include polyethylene, polypropylene, and polyethylene terephthalate. Among these, polyethylene is the most widely used resin in existing packaging films and is particularly in high demand for use in monomaterial packaging films.

As an example of a packaging film in which polyethylene is used, a laminate has been proposed that includes a base film and a sealant film, both composed of polyethylene, with the base film having been subjected to a stretching process. It is described that such a configuration can provide a laminate having excellent recycling suitability, printing suitability, and strength, as well as improved transparency of the base film (see, for example, Patent Document 1).

### CITATION LIST

### PATENT DOCUMENT

PATENT DOCUMENT 1: Japanese Unexamined Patent Application Publication No. 2019-171860

### SUMMARY OF THE INVENTION

### TECHNICAL PROBLEM

Various functional properties are required in packaging films. On the other hand, it is known that stretching the film causes thermal shrinkage. In the packaging film described in Patent Document 1, polyethylene having a density of less than 0.950 g/cm³ is used as the main component, which results in a high thermal shrinkage percentage. Accordingly, during heat sealing in the bag-making process, the base film shrinks, causing wrinkles to form and leading to defective appearance.

The present invention has been made in view of the above problem, and it is an object of the present invention to provide a stretched film having excellent heat resistance.

### SOLUTION TO THE PROBLEM

In order to achieve the above object, the stretched film according to the present invention is a stretched film composed mainly of polyethylene having a density of 0.950 g/cm³ or more. The content of the polyethylene having a density of 0.950 g/cm³ or more in the entire stretched film exceeds 50 mass%, and the thermal shrinkage percentage in a film stretching direction upon heating at 120°C for 10 minutes is 3% or less.

The method for manufacturing a stretched film according to the present invention is a method for manufacturing a stretched film that includes at least: a step of preparing a raw film composed mainly of polyethylene having a density of 0.950 g/cm³ or more; and a step of performing a stretching process on the raw film. The content of the polyethylene having a density of 0.950 g/cm³ or more in the entire raw film exceeds 50 mass%, and the stretching temperature in the stretching process is 125°C or higher and lower than 130°C.

### ADVANTAGES OF THE INVENTION

The present invention makes it possible to provide a stretched film with excellent heat resistance.

### BRIEF DESCRIPTION OF THE DRAWINGS

[FIG. 1] A cross-sectional view illustrating a laminate using a stretched film of the present invention.
[FIG. 2] A plan view illustrating the laminate using the stretched film of the present invention.

### DESCRIPTION OF EMBODIMENTS

A stretched film of the present invention will now be described in detail. It should be noted that the present invention is not limited to the embodiment described below and may be modified and applied as appropriate without departing from the spirit and scope of the invention.

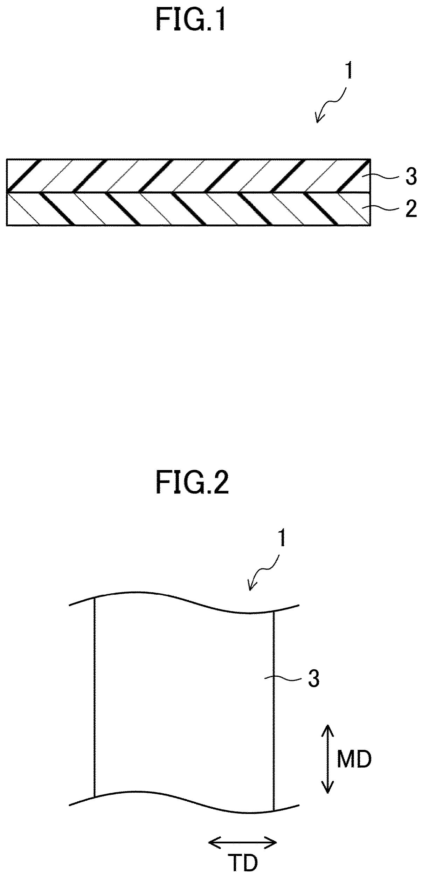

FIG. 1 is a cross-sectional view showing a laminate using the stretched film of the present invention.

A laminate 1 includes a polyethylene film (stretched film) 3 serving as a base film, and a sealant film 2 laminated onto the polyethylene film 3.

### <Sealant Film>

The sealant film 2 of the present invention is preferably made of a polyethylene-based resin from the standpoint of monomateriality. More specifically, examples include high-density polyethylene (HDPE), medium-density polyethylene (MDPE), low-density polyethylene (LDPE), and linear low-density polyethylene (LLDPE).

From the standpoint of improving heat sealability, low-density polyethylene (LDPE) or linear low-density polyethylene (LLDPE), which has a lower melting point than the base film, is preferred in order to provide a difference in melting point from the base film.

The polyethylene content of the sealant film 2 is preferably 70% or more, more preferably 90% or more, still more preferably 95% or more, and most preferably 100%.

The thickness of the sealant film 2 is preferably from 20 µm to 200 µm, and more preferably from 30 µm to 150 µm.

The sealant film 2 may further contain components other than the polyethylene-based resins described above, as long as such components do not impair the properties of the sealant film 2.

Examples of such other components include olefin-based resins, amide-based anti-blocking agents (such as stearamide), plasticizers, ultraviolet absorbers, antioxidants, weathering stabilizers, antistatic agents, colorants, anti-fogging agents, metal soaps, waxes, antifungal agents, antibacterial agents, nucleating agents, flame retardants, and slip agents.

### <Polyethylene Film>

The polyethylene film 3 of the present invention is composed mainly of high-density polyethylene (HDPE). In the present invention, the density of the high-density polyethylene is 0.950 g/cm³ or more. This is because, when the density is less than 0.950 g/cm³, the melting point of the polyethylene becomes lower, resulting in an increased thermal shrinkage percentage and reduced heat resistance, and also reduced film strength.

It is preferable that the density of the high-density polyethylene be less than 0.970 g/cm³. This is because, when the density is 0.970 g/cm³ or more, the high-density polyethylene becomes harder and more prone to tearing, which may make it difficult to produce the stretched film.

The melting point of the high-density polyethylene is preferably in the range of 130 to 140°C, and more preferably in the range of 132 to 140°C. This is because, when the melting point is less than 130°C, stretching at the stretching temperature (125°C) or higher described later may not be possible, which may result in reduced heat resistance of the stretched film.

The "melting point" as used herein refers to the value measured in accordance with JIS K 7121:1987, and is obtained by measuring the temperature at which the main endothermic peak appears using a differential scanning calorimeter (DSC).

The melt mass-flow rate (MFR) of the high-density polyethylene is preferably from 0.01 to 3.00 g/10 min, more preferably from 0.02 to 2.50 g/10 min, and still more preferably from 0.1 to 2.00 g/10 min. This is because, when the melt mass-flow rate is 0.01 g/10 min or more, the high-density polyethylene can be formed into a film using a general-purpose extruder without requiring special equipment, and when the melt mass-flow rate is 3.00 g/10 min or less, sufficient film strength can be achieved.

The above melt mass-flow rate is obtained by measurement in accordance with JIS K 7210:1999.

From the standpoint of further improving heat resistance, the content of the high-density polyethylene in the polyethylene film is more than 50 mass%, and preferably 70 mass% or more, per 100 mass% of the polyethylene film.

The polyethylene film 3 of the present invention may contain ultra-high molecular weight polyethylene (UHMWPE) in addition to the above-described main component, high-density polyethylene. When a mixture of the ultra-high molecular weight polyethylene with the high-density polyethylene serving as the main component is used as the polyethylene constituting the polyethylene film 3, it becomes possible to perform stretching at a higher temperature without causing the film to melt, thereby further improving heat resistance.

The ultra-high molecular weight polyethylene is in the form of a solid powder, and polyethylene having a viscosity average molecular weight (Mv) of 500,000 to 3,000,000 may be used. This is because, when the viscosity average molecular weight (Mv) is less than 500,000, the melt strength becomes low, and the effect obtained by mixing the ultra-high molecular weight polyethylene (namely, the ability to perform stretching at a higher temperature without causing the film to melt) may be reduced. In addition, when the viscosity average molecular weight (Mv) exceeds 3,000,000, the ultra-high molecular weight polyethylene may not melt and may fail to mix with the high-density polyethylene (may result in gelation during kneading and forming).

The ultra-high molecular weight polyethylene may be, for example, a commercially available product such as HI-ZEX MILLION 030S (manufactured by Mitsui Chemicals, Inc., viscosity average molecular weight: 500,000).

Alternatively, crosslinked polyethylene obtained using a crosslinking agent, electron beam irradiation, etc., or polyethylene polymerized to have a viscosity average molecular weight in the range of 500,000 to 3,000,000 (i.e., synthesized), may be used.

The "viscosity average molecular weight" as used herein refers to a value calculated in accordance with JIS K 7367-3:1999.

As the ultra-high molecular weight polyethylene, one whose melting point after recrystallization is in the range of 130 to 140°C is preferred, and one whose melting point after recrystallization is in the range of 132 to 140°C is more preferred.

When ultra-high molecular weight polyethylene is used, the content of the ultra-high molecular weight polyethylene in the entire polyethylene film is preferably more than 0 mass% and 30 mass% or less, per 100 mass% of the polyethylene film. This is because, when the content of the ultra-high molecular weight polyethylene exceeds 30 mass%, the transparency of the film may be reduced.

The content of polyethylene (i.e., high-density polyethylene and ultra-high molecular weight polyethylene) in the entire polyethylene film is preferably 90 mass% or more, and more preferably 95 mass% or more, per 100 mass% of the polyethylene film. This is because, when the polyethylene content exceeds 90 mass%, the entire laminate 1 can be regarded as a monomaterial composed of polyethylene, thereby improving recyclability.

### <Other Components>

The polyethylene film may further contain components other than the above-described high-density polyethylene and ultra-high molecular weight polyethylene, as long as such components do not impair the heat resistance of the polyethylene film.

Examples of such other components include olefin-based resins, amide-based anti-blocking agents (such as stearamide), plasticizers, ultraviolet absorbers, antioxidants, weathering stabilizers, antistatic agents, colorants, anti-fogging agents, metal soaps, waxes, antifungal agents, antibacterial agents, nucleating agents, flame retardants, and slip agents.

### <Method for Manufacturing Laminate>

Next, an example of a method for manufacturing a laminate using the stretched film of the present invention will be described in detail.

First, a polyethylene film is produced by forming a material containing the above-described high-density polyethylene into a film using an extruder.

More specifically, the high-density polyethylene and, as needed, other components such as the above-described ultra-high molecular weight polyethylene are mixed at a predetermined mixing ratio, and the mixture is formed into a film by melt extrusion using an extruder equipped with a T-die. A raw film before stretching is thus obtained.

As with the above-described contents of the high-density polyethylene and the ultra-high molecular weight polyethylene in the entire polyethylene film, the content of the high-density polyethylene in the entire raw film is more than 50 mass% per 100 mass% of the raw film, and the content of the ultra-high molecular weight polyethylene in the entire raw film is more than 0 mass% and 30 mass% or less, per 100 mass% of the raw film.

The raw film is then subjected to a uniaxial stretching process to produce a stretched film that serves as the polyethylene film 3 shown in FIGS. 1 and 2. The stretching method is not particularly limited, and examples include roll stretching and tenter stretching.

The uniaxial stretching process mentioned above refers to a stretching process performed in either the machine axis (longitudinal) direction of the film (hereinafter referred to as "MD") or in the direction perpendicular to the MD (hereinafter referred to as "TD"), as shown in FIG. 2. A biaxial stretching process in which a stretching process is performed in both the MD and the TD may also be used.

When the polyethylene film 3 is composed solely of high-density polyethylene, the stretching temperature in the uniaxial stretching process is 125°C or higher and lower than 129°C, and preferably 127°C or higher and lower than 129°C. This is because, when the stretching temperature is lower than 125°C, the thermal shrinkage percentage may increase and heat resistance may decrease, and when the stretching temperature is 129°C or higher, the film may melt and break.

That is, when the stretching temperature falls within the above-described range, heat setting becomes more effective, thereby reducing the thermal shrinkage percentage at high temperatures (120°C) and improving the heat resistance.

In addition, when the polyethylene film 3 is composed of high-density polyethylene and ultra-high molecular weight polyethylene, the stretching temperature is preferably 125°C or higher and lower than 130°C, and preferably 127°C or higher and lower than 130°C. By mixing ultra-high molecular weight polyethylene with high-density polyethylene, it becomes possible to perform stretching at a higher temperature without causing the film to melt, thereby further improving the heat resistance.

The stretch ratio in the uniaxial stretching process is 4 or more and 10 or less. This is because, when the stretch ratio is less than 4, unstretched portions may remain, which may lead to a decrease in transparency. In addition, when the stretch ratio exceeds 10, the film may break. From the standpoint of improving transparency and preventing film breakage, the stretch ratio is preferably 5 or more and 8 or less.

The polyethylene film produced by the above-described stretching process contains high-density polyethylene having a density of 0.950 g/cm³ or more as the main component. Since the melting point of the high-density polyethylene is high, an increase in the thermal shrinkage percentage can be suppressed. As a result, the thermal shrinkage percentage in the film stretching direction upon heating at 120°C for 10 minutes is 3% or less, enabling improved dimensional stability during heat treatment and thereby providing excellent heat resistance.

From the standpoint of improving the heat resistance, the thermal shrinkage percentage of the polyethylene film is preferably 2% or less, and more preferably 1% or less.

The "thermal shrinkage percentage" mentioned above can be measured by the method that will be described later in the examples.

In the polyethylene film of the present invention, the haze (HAZE) is 20% or less, thereby enabling excellent transparency to be achieved.

From the standpoint of further improving transparency, the haze of the polyethylene film is preferably 10% or less, more preferably 7% or less, and even more preferably 5% or less.

The "haze" as used herein refers to an index of the degree of cloudiness, as measured in accordance with JIS K 7361.

It is preferable that the polyethylene film of the present invention have a tensile rupture stress of 100 MPa or more in either or both of the MD and the TD. When the tensile rupture stress is 100 MPa or more, a polyethylene film can be provided that exhibits improved transparency and sufficient strength as a base film.

From the standpoint of further improving transparency, the tensile rupture stress of the polyethylene film is preferably 200 MPa or more.

The "tensile rupture stress" as used herein refers to the stress measured in accordance with JIS K 7127.

In addition, the thickness of the raw film before the stretching process is preferably 100 µm or more and 300 µm or less, and more preferably 100 µm or more and 250 µm or less. When the thickness of the raw film is 100 µm or more, strength sufficient to withstand the stress during stretching can be obtained. When the thickness of the raw film is 300 µm or less, sufficient transparency can be obtained after stretching.

The thickness of the polyethylene film after the stretching process is preferably 10 µm or more and 50 µm or less, and more preferably 20 µm or more and 40 µm or less. When the thickness of the polyethylene film after the stretching process is 10 µm or more, sufficient strength as a base film can be obtained. When the thickness of the polyethylene film after the stretching process is 50 µm or less, sufficient transparency can be obtained.

According to the present invention, a polyethylene film having excellent heat resistance, strength, and transparency can be obtained by the above method.

The polyethylene film serving as the base film may be a single-layer film or a multilayer film composed of two or more layers. When the polyethylene film is a multilayer film, the composition and thickness of each layer may be the same or different. The thickness of the polyethylene film, when it is a multilayer film, refers to the total thickness of the multiple layers.

Subsequently, a raw material containing a polyethylene-based resin such as high-density polyethylene (HDPE), medium-density polyethylene (MDPE), low-density polyethylene (LDPE), or linear low-density polyethylene (LLDPE), as described above, is prepared, and the sealant film 2 is produced by forming the raw material into a film using an extruder by the same method as that for the polyethylene film described above.

The laminate 1 shown in FIG. 1 is manufactured by, for example, laminating the polyethylene film 3 and the sealant film 2 via an adhesive.

### Examples

The present invention will now be described based on examples. However, the present invention is not limited to these examples, and various modifications and changes may be made to the examples without departing from the spirit and scope of the present invention. Such modifications and changes are not excluded from the scope of the present invention.

The materials used for producing the stretched films are as follows.
(1) HDPE 1: high-density polyethylene (density: 0.951 g/cm³, melting point: 133.6°C, MFR: 1.0 g/10 min; manufactured by Tosoh Corporation)
(2) HDPE 2: high-density polyethylene (density: 0.958 g/cm³, melting point: 133°C, MFR: 0.98 g/10 min; manufactured by Prime Polymer Co., Ltd., trade name: HI-ZEX 3600F)
(3) HDPE 3: high-density polyethylene (density: 0.960 g/cm³, melting point: 135°C, MFR: 1.0 g/10 min; manufactured by Japan Polyethylene Corporation, trade name: NOVATEC HY540)
(4) MDPE: medium-density polyethylene (density: 0.943 g/cm³, melting point: 126°C, MFR: 0.24 g/10 min; manufactured by Prime Polymer Co., Ltd., trade name: HI-ZEX 5100E)
(5) UHMWPE: ultra-high molecular weight polyethylene (viscosity average molecular weight: 500,000; density: 0.949 g/cm³, melting point after recrystallization: 132.8°C; manufactured by Mitsui Chemicals, Inc., trade name: HI-ZEX MILLION 030S)

### (Example 1)

### <Production of Stretched Film>

First, the high-density polyethylene shown in Table 1 was prepared. Next, the prepared high-density polyethylene was formed into a film by melt extrusion (extrusion temperature: 200°C) using an extruder equipped with a T-die (manufactured by LABTECH), and the film was wound up by a take-up roller to obtain a raw film before stretching having the thickness shown in Table 1.

The raw film was then subjected to a uniaxial stretching process in the MD under the conditions of the stretching temperature and stretch ratio shown in Table 1. The raw film was thus stretched to produce a stretched film (polyethylene film) made of high-density polyethylene and having the thickness shown in Table 1.

### <Calculation of Thermal Shrinkage Percentage>

A sample with a predetermined size (7 cm × 7 cm) was cut out from the produced stretched film. Orthogonal reference lines, each of which is parallel to the corresponding side of the sample and is 5 cm long, were marked 1 cm inward from each side of the sample. The sample was then placed in an oven at 120°C and heated for 10 minutes. Thereafter, the sample was removed and cooled to room temperature. The distance between the reference lines of the heat-treated sample in the stretching direction (i.e., the MD) was measured. Based on the change in the distance between the reference lines in the stretching direction before and after the heating, the thermal shrinkage percentage [%] was calculated using the following expression (1), and the calculated thermal shrinkage percentage was used as an index of heat resistance. The results are shown in Table 1.

Thermal shrinkage percentage in the stretching direction [%] = [(distance between reference lines before heating) - (distance between reference lines after heating)/distance between reference lines before heating] × 100 (1)

### <Measurement of Tensile Rupture Stress>

The tensile rupture stress [MPa] of the produced stretched film was measured in accordance with JIS K 7127. More specifically, strip-shaped test specimens having dimensions of 200 mm in the MD direction and 10 mm in the TD direction were prepared, and a tensile test was conducted using a tensile tester (manufactured by Shimadzu Corporation, trade name: AUTOGRAPH AG-5000A) under the conditions of a temperature of 25°C and a tensile speed of 100 mm/min. The tensile rupture stress [MPa] was measured in both the MD and the TD. The results are shown in Table 1.

### <Measurement of Haze>

The haze [%] in the visible light region (in the range of 360 to 750 nm) of polyethylene was measured as an index of the degree of cloudiness of the produced stretched film, in accordance with JIS K 7361, using a spectrophotometer (manufactured by Nippon Denshoku Industries Co., Ltd., product name: HAZE METER NDH 5000). The results are shown in Table 1.

### (Examples 2 to 7, Comparative Examples 1 to 6)

Except that the composition of the stretched film (i.e., the polyethylene used) and the conditions of the uniaxial stretching process were changed to those shown in Table 1, raw films having the thicknesses shown in Table 1 were subjected to the stretching process in the same manner as in Example 1, thereby producing stretched films.

Thereafter, the thermal shrinkage percentage was calculated and the tensile rupture stress and haze were measured in the same manner as in Example 1. The results are shown in Tables 1 and 2.

In Comparative Example 2, since the raw film before stretching was composed solely of high-density polyethylene and the stretching temperature during the film forming in the uniaxial stretching process was 129°C, the stretched film melted. Accordingly, for Comparative Example 2, the thermal shrinkage percentage could not be calculated, and the tensile rupture stress and haze could not be measured.

In Comparative Example 4, since the raw film before stretching was composed solely of medium-density polyethylene and this polyethylene has a lower density (i.e., a lower melting point), the stretched film melted at the stretching temperature (125°C) during film formation in the uniaxial stretching process. Accordingly, for Comparative Example 4, the thermal shrinkage percentage could not be calculated, and the tensile rupture stress and haze could not be measured.

In Comparative Example 5, since the raw film before stretching was composed solely of medium-density polyethylene and this polyethylene has a lower density, the stretched film broke at the stretch ratio (of 5) during film formation in the uniaxial stretching process. Accordingly, for Comparative Example 5, the thermal shrinkage percentage could not be calculated, and the tensile rupture stress and haze could not be measured.

In Comparative Example 6, since the raw film before stretching was composed of high-density polyethylene and ultra-high molecular weight polyethylene, and the stretching temperature during film formation in the uniaxial stretching process was 130°C, the stretched film melted. Accordingly, for Comparative Example 6, the thermal shrinkage percentage could not be calculated, and the tensile rupture stress and haze could not be measured.

### (Comparative Example 7)

First, two types of polyethylene (HDPE 3 and MDPE described above) shown in Table 3 were prepared. Next, using an extruder equipped with a T-die (manufactured by LABTECH), the two types of polyethylene were co-extruded at an extrusion temperature of 200°C, thereby forming a film having a three-layer structure in which a first base layer, a second base layer, and a third base layer were laminated in this order. The film was wound up by a take-up roller to obtain a raw film before stretching having the thickness shown in Table 3.

The raw film was then subjected to a uniaxial stretching process in the MD under the conditions of the stretching temperature and stretch ratio shown in Table 3. The raw film was thus stretched to produce a stretched film (polyethylene film) having a three-layer structure formed of the two types of polyethylene and having the thickness shown in Table 3.

The thermal shrinkage percentage was calculated and the tensile rupture stress and the haze were measured in the same manner as in Example 1. The results are shown in Table 3.

### (Comparative Example 8)

Except that the stretching temperature in the uniaxial stretching process was changed to that in the conditions shown in Table 3 (125°C), a raw film having the thickness shown in Table 3 was subjected to a stretching process in the same manner as in Comparative Example 7 described above to produce a stretched film.

In Comparative Example 8, since the entire second base layer in the raw film before stretching is composed of medium-density polyethylene having a lower density (a lower melting point), the second base layer made of medium-density polyethylene melted at the stretching temperature (125°C) during film formation in the uniaxial stretching process. Therefore, in Comparative Example 8, the thermal shrinkage percentage could not be calculated, and the tensile rupture stress and haze could not be measured.

**[Table 1]**

| | | | Example 1 | Example 2 | Example 3 | Example 4 | Example 5 | Example 6 | Example 7 |
|---|---|---|---|---|---|---|---|---|---|
| HDPE 1 | | | 100 | 100 | 100 | | | 90 | 70 |
| HDPE 2 | | | | | | 100 | 100 | | |
| MDPE | | | | | | | | | |
| UHMWPE | | | | | | | | 10 | 30 |
| Thickness [µm] | Raw Film | | 200 | 103 | 200 | 216 | 216 | 221 | 197 |
| | Stretched Film | | 28 | 22 | 30 | 30 | 30 | 34 | 25 |
| Stretching | Stretching Direction | | MD | MD | MD | MD | MD | MD | MD |
| | Stretching Temperature [°C] | | 125 | 125 | 128 | 125 | 127 | 128 | 129 |
| | Stretch Ratio [-] | | 6 | 4 | 6 | 6 | 6 | 6 | 6 |
| Evaluation | Thermal Shrinkage Percentage in Stretching Direction [%] | | 2.8 | 2.8 | 1.2 | 2.3 | 1.3 | 0.9 | 0.8 |
| | Tensile Rupture Stress [MPa] | MD | 332 | 205 | 174 | 279 | 155 | 181 | 317 |
| | | TD | 36 | 33 | 27 | 33 | 32 | 33 | 36 |
| | Haze [%] | | 6.0 | 3.8 | 9.4 | 4.9 | 7.0 | 13.5 | 16.1 |

**[Table 2]**

| | | | Comparative Example 1 | Comparative Example 2 | Comparative Example 3 | Comparative Example 4 | Comparative Example 5 | Comparative Example 6 |
|---|---|---|---|---|---|---|---|---|
| HDPE 1 | | | 100 | 100 | | | | 70 |
| HDPE 2 | | | | | | | | |
| MDPE | | | | | 100 | 100 | 100 | |
| UHMWPE | | | | | | | | 30 |
| Thickness [µm] | Raw Film | | 170 | 200 | 114 | 114 | 114 | 197 |
| | Stretched Film | | 25 | - | 28 | - | - | - |
| Stretching | Stretching Direction | | MD | MD | MD | MD | MD | MD |
| | Stretching Temperature [°C] | | 120 | 129 | 120 | 125 | 120 | 130 |
| | Stretch Ratio [-] | | 6 | 6 | 4 | 4 | 5 | 6 |
| Evaluation | Thermal Shrinkage Percentage in Stretching Direction [%] | | 6.8 | - | 18.1 | - | - | - |
| | Tensile Rupture Stress [Mpa] | MD | 388 | - | 279 | - | - | - |
| | | TD | 45 | - | 21 | - | - | - |
| | Haze [%] | | 4.2 | - | 24.2 | - | - | - |

**[Table 3]**

| | | | Comparative Example 7 | Comparative Example 8 |
|---|---|---|---|---|
| First Base Layer | HDPE 3 | | 100 | 100 |
| | MDPE | | | |
| Second Base Layer | HDPE 3 | | | |
| | MDPE | | 100 | 100 |
| Third Base Layer | HDPE 3 | | 100 | 100 |
| | MDPE | | | |
| Thickness [µm] | Raw Film | First Base Layer | 18 | 18 |
| | | Second Base Layer | 65 | 65 |
| | | Third Base Layer | 19 | 19 |
| | | Entire Film | 102 | 102 |
| | Stretched Film | First Base Layer | 4 | 5 |
| | | Second Base Layer | 12 | - |
| | | Third Base Layer | 4 | 5 |
| | | Entire Film | 20 | - |
| Stretching | Stretching Direction | | MD | MD |
| | Stretching Temperature [°C] | | 120 | 125 |
| | Stretch Ratio [-] | | 5 | 5 |
| Evaluation | Thermal Shrinkage Percentage in Stretching Direction [%] | | 17.1 | - |
| | Tensile Rupture Stress [Mpa] | MD | 427 | - |
| | | TD | 29 | - |
| | Haze [%] | | 6.2 | - |

As shown in Table 1, the stretched films of Examples 1 to 7 contain high-density polyethylene having a density of 0.950 g/cm³ or more, and the content of the high-density polyethylene in the entire stretched film exceeds 50 mass%. The thermal shrinkage percentage in the film stretching direction upon heating at 120°C for 10 minutes is 3% or less. This indicates that these stretched films exhibit high dimensional stability during heat treatment and excellent heat resistance.

In particular, the stretched films of Examples 6 and 7 are composed of high-density polyethylene and ultra-high molecular weight polyethylene having a viscosity average molecular weight (Mv) of 500,000. Since the content of the ultra-high molecular weight polyethylene in the entire stretched film is 30 mass% or less, stretching can be performed at a higher temperature (128 to 129°C) without causing the film to melt, and the thermal shrinkage percentage is 1% or less. This indicates that these stretched films exhibit extremely high heat resistance.

As shown in Table 2, in the stretched film of Comparative Example 1, the thermal shrinkage percentage is high due to the low stretching temperature of 120°C. This indicates that this stretched film exhibits poor heat resistance.

In the stretched film of Comparative Example 3, which is composed solely of medium-density polyethylene, the thermal shrinkage percentage is extremely high due to the low stretching temperature of 120°C, indicating poor heat resistance. In addition, the haze exceeds 20%, indicating poor transparency.

As shown in Table 3, in Comparative Example 7, the thermal shrinkage percentage is high due to the low stretching temperature of 120°C, indicating poor heat resistance.

### INDUSTRIAL APPLICABILITY

As described above, the present invention is suitable for stretched films used for packaging films etc.

### DESCRIPTION OF REFERENCE CHARACTERS

- 1: Laminate
- 2: Sealant Film
- 3: Polyethylene Film (Stretched Film)

## Claims

1. A stretched film composed mainly of polyethylene having a density of 0.950 g/cm³ or more, wherein
a content of the polyethylene having a density of 0.950 g/cm³ or more in the entire stretched film exceeds 50 mass%, and
a thermal shrinkage percentage in a film stretching direction upon heating at 120°C for 10 minutes is 3% or less.

2. The stretched film of claim 1, wherein the stretched film is composed solely of the polyethylene having a density of 0.950 g/cm³ or more.

3. The stretched film of claim 1, wherein the stretched film further contains ultra-high molecular weight polyethylene having a viscosity average molecular weight (Mv) of 500,000 to 3,000,000, and
a content of the ultra-high molecular weight polyethylene in the entire stretched film is 30 mass% or less.

4. A laminate comprising:
the stretched film of any one of claims 1 to 3; and
a sealant film laminated on the stretched film.

5. A method for manufacturing a stretched film, the method comprising at least:
a step of preparing a raw film composed mainly of polyethylene having a density of 0.950 g/cm³ or more; and
a step of performing a stretching process on the raw film, wherein
a content of the polyethylene having a density of 0.950 g/cm³ or more in the entire raw film exceeds 50 mass%, and
a stretching temperature in the stretching process is 125°C or higher and lower than 130°C.

6. The method for manufacturing a stretched film of claim 5, wherein the raw film is composed solely of the polyethylene having a density of 0.950 g/cm³ or more.

7. The method for manufacturing a stretched film of claim 5, wherein
the raw film further contains ultra-high molecular weight polyethylene having a viscosity average molecular weight (Mv) of 500,000 to 3,000,000, and
a content of the ultra-high molecular weight polyethylene in the entire raw film is 30 mass% or less.
